# EUROPEAN PATENT APPLICATION

(11) **EP 3 955 069 A1**
(43) Date of publication of application: **16.02.2022**
(21) Application number: 20785188.2
(22) Date of filing: 20.02.2020
(51) Int. Cl.: G05B 19/05, G06F 21/57, G06F 21/62, G06F 13/00

(54) **CONTROLLER SYSTEM**

(30) Priority: 29.03.2019 JP 2019066007
(71) Applicant: OMRON CORPORATION, Kyoto, Kyoto 600-8530 (JP)
(72) Inventor: HIROBE, Naoki, Kyoto-shi, Kyoto 600-8530 (JP); NAGATA, Yuta, Kyoto-shi, Kyoto 600-8530 (JP)
(74) Representative: Becker, Eberhard
(86) International application number: PCT/JP2020/006830
(87) International publication number: WO 2020/202884

(57) **Abstract**

A controller system (1) is provided with a control unit (100), a security unit (200), and a presentation means (HMI (800)). The security unit (200) stores countermeasure scenarios corresponding to threat analyses concerning the device configuration and protected assets of the controller system (1), and sets security functions in accordance with the countermeasure scenarios. The presentation means presents a user with points requiring security countermeasures in the controller system (1) in accordance with the countermeasure scenarios.

## Description

### BACKGROUND

### Technical Field

The present invention relates to a security function for a controller system controlling a control target.

### Description of Selected Art

In recent years, damage such as malware has occurred at manufacturing sites such as factories, and security countermeasures have become indispensable for control devices such as a programmable logic controller (PLC). Therefore, when developing equipment and production lines of factories or the like, it is necessary for production engineers, equipment manufacturer developers, and the like to take security countermeasures.

In a PLC, for example, as disclosed in Japanese Patent Application Laid-Open No. 2000-137506 (Patent Literature 1), when an abnormality history is registered or when a predetermined time has come, only e-mails are sent to pre-specified destination, and no consideration is given to security countermeasures.

### Related Art

### Patent Literature

[Patent Literature 1] Japanese Patent Application Laid-Open No. 2000-13756

### SUMMARY

### Problems to be solved

In particular, with the recent progress of information and communication technology (ICT), the control device is also connected to various external devices via a network, and the processing executed by the control device is also becoming more sophisticated. With such networking or improved intelligence, the types of security threats that can be assumed are also increasing.

When taking security countermeasures at manufacturing sites such as factories, in addition to taking countermeasures that are based on security functions of the control device, it is necessary to take countermeasures that are based on operations by operators (users) at the manufacturing site. For such countermeasures, it is indispensable to educate operators at the manufacturing site, and at present, trainings are conducted to familiarize them with the countermeasures that are based on the operations.

However, in some cases, the countermeasures that are based on the operations differ for each device handled by the operator at the manufacturing site, and there is a problem that it is difficult for the operator to easily grasp which device to take measures based on which operation. In addition, when operators fail to take countermeasures that are based on the operations, it may cause security vulnerability of the control device.

One object of this invention is to solve the new issue that a user can easily grasp countermeasures against security threats that may occur due to networking or improved intelligence of control devices and control systems.

### Means for Solving the Problems

According to an aspect of this invention, a controller system includes a control unit that executes control calculation for controlling a control target, a security unit connected to the control unit and responsible for a security function for the controller system, and a presentation means that presents a user with a security countermeasure in the controller system by the security unit, in which the security unit stores a countermeasure scenario corresponding to a threat analysis concerning a device configuration and protected assets of the controller system, and sets a security function in accordance with the countermeasure scenario, and the presentation means presents the user with a point requiring the security countermeasure in the controller system in accordance with the countermeasure scenario.

According to this aspect, the controller system can make it easy for a user to grasp the countermeasures against security threats.

Preferably, the presentation means may identify and present the user with the point requiring the security countermeasure in the controller system according to a risk to a security threat. According to this aspect, it is possible to make it easier to grasp the points requiring security countermeasures.

Preferably, the presentation means may present the user with the content of the threat assumed at the point requiring the security countermeasure in the controller system. According to this aspect, it is possible to make it easier to grasp the threats at the points requiring security countermeasures.

Preferably, the presentation means may present the user with a point requiring a countermeasure scenario. According to this aspect, it is possible to make it easier to grasp the point where the security function is set.

Preferably, the presentation means may present the user with a point where the countermeasure that is based on the operation not using the security function of the security unit needs to be taken in accordance with the countermeasure scenario. According to this aspect, it is possible to make it easier to grasp the points where the countermeasures that are based on the operations are to be taken.

Preferably, the presentation means may present a display prompting the user to take the countermeasure that is based on the operation. According to this aspect, it is possible to prevent the user from failing to take the countermeasures that are based on the operations.

Preferably, an authentication means for authenticating that the user may access the controller system may be further provided, and the presentation means present the point requiring the security countermeasure in the controller system in accordance with the countermeasure scenario only to a user authenticated by the authentication means. According to this aspect, unauthorized access can be prevented from the confirmation of security countermeasures.

Preferably, a storage means for storing the user's confirmation operation as a confirmation history may be further provided. According to this aspect, the confirmation history can be taken as an attendance history of security education.

Preferably, a notification means for notifying the user of the confirmation history stored in the storage means may be further provided. According to this aspect, it becomes easy for the user to confirm the confirmation history.

Preferably, it may be possible to edit the countermeasure scenario presented by the presentation means according to the authority of the user authenticated by the authentication means. According to this aspect, the editing of the countermeasure scenario can be restricted by the user's authority, such that unauthorized editing can be prevented.

Preferably, the security unit may perform threat analysis in a support device connected to the controller system and store the countermeasure scenario created. According to this aspect, the support device can analyze the security threats and easily set the countermeasures against the threats.

### Effects

According to this invention, it is possible to solve that new issue that a user can easily grasp the countermeasures against the security threats that may occur due to the networking or improved intelligence of the control device and the control system.

### BRIEF DESCRIPTION OF THE DRAWINGS

Figure 1 is an appearance view showing a configuration example of a controller system according to this embodiment.
Figure 2 is a schematic view showing a hardware configuration example of a control unit configuring the controller system according to this embodiment.
Figure 3 is a schematic view showing a hardware configuration example of a security unit configuring the controller system according to this embodiment.
Figure 4 is a schematic view showing a hardware configuration example of a safety unit configuring the controller system according to this embodiment.
Figure 5 is a block view showing a configuration for confirming a security threat countermeasure in a controller system according to this embodiment.
Figure 6 is a sequence showing a process for making an operator to confirm a security threat countermeasure in the controller system and an HMI according to this embodiment.
Figure 7 is a flowchart showing a process for making an operator to confirm a security threat countermeasure in a controller system and an HMI according to this embodiment.
Figure 8 is a screen for authentication confirmation displayed on the HMI in step S501.
Figure 9 is an example of a screen for confirming the contents of the security countermeasures displayed on the HMI in step S503.
Figure 10 is an example of a screen for confirming assumed threats displayed on the HMI in step S504.
Figure 11 is an example of a screen for confirming security countermeasures displayed on the HMI in step S505.
Figure 12 is an example of a confirmation log indicating that the security countermeasures stored in the security unit have been confirmed in step S507.
Figure 13 is a sequence showing a process of confirming the confirmation log by a support device connected to the controller system according to this embodiment.
Figure 14 is a flowchart showing a process of confirming the confirmation log by the support device connected to the controller system according to this embodiment.
Figure 15 is an example of a display screen of the confirmation log that is notified to the support device 600 in step S603 and displayed by the support device 600.
Figure 16 is a view showing the difference in processing depending on the access authority.
Figure 17 is a block view showing a system configuration for performing security setting by a support device connected to the controller system according to this embodiment.
Figure 18 is a schematic view showing a hardware configuration example of the support device connected to a controller system according to this embodiment.
Figure 19 is a sequence showing threat analysis and security setting in the controller system and the support device according to this embodiment.
Figure 20 is a flowchart showing a processing procedure of creating a threat scenario list in the support device according to this embodiment.
Figure 21 is a flowchart showing a processing procedure of creating a countermeasure scenario in the support device according to this embodiment.
Figure 22 is a view showing an example of a protected asset evaluation list created by the support device according to this embodiment.
Figure 23 is a view showing an example of a threat list created by the support device according to this embodiment.
Figure 24 is a view showing an example of a threat scenario list created by the support device according to this embodiment.
Figure 25 is a view showing an example of a countermeasure scenario created by the support device according to this embodiment.

### DESCRIPTION OF THE EMBODIMENTS

Embodiments of this invention will be described in detail with reference to the drawings. The same or similar parts in the drawings will be labeled with the same reference numerals, and descriptions thereof will not be repeated.

### <A. Application example>

An example of a situation to which this invention is applicable will be described. First, a configuration of a controller system 1 according to this embodiment will be described.

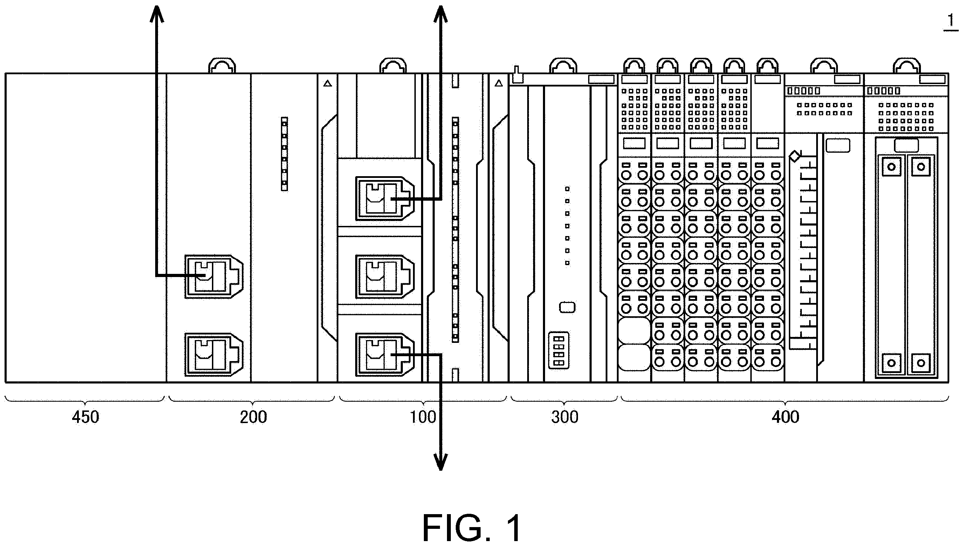

Figure 1 is an appearance view showing a configuration example of the controller system 1 according to this embodiment. Referring to Figure 1, the controller system 1 includes a control unit 100, a security unit 200, a safety unit 300, one or a plurality of functional units 400, and a power unit 450.

The control unit 100 and the security unit 200 are connected to each other via any data transmission path (e.g. PCI Express or Ethernet (registered trademark)). The control unit 100, the safety unit 300, and the one or plurality of functional units 400 are connected to each other via an internal bus (not shown).

The control unit 100 executes principal processes in the controller system 1. The control unit 100 executes control calculation for controlling a control target according to request specifications that have been arbitrarily designed. The control calculation executed by the control unit 100 will also be referred to as "standard control" as compared to control calculation executed by the safety unit 300 to be described later. In the configuration example shown in Figure 1, the control unit 100 has one or a plurality of communication ports.

The security unit 200 is connected to the control unit 100 and is responsible for security functions for the controller system 1. In the configuration example shown in Figure 1, the security unit 200 has one or a plurality of communication ports. Details of the security functions provided by the security unit 200 will be described later.

The safety unit 300 executes control calculation for realizing safety functions related to a control target independently from the control unit 100. The control calculation executed by the safety unit 300 will also be referred to as "safety control". Typically, the "safety control" is designed to satisfy requirements for realizing safety functions specified in IEC 61508. "Safety control" is a general term for processes for preventing human safety from being threatened by equipment, machines, or the like.

The functional unit 400 provides various functions for realizing control for various control targets of the controller system 1. The functional unit 400 may typically include an I/O unit, a safety I/O unit, a communication unit, a motion controller unit, a temperature adjustment unit, a pulse counter unit, and the like. The I/O unit may include, for example, a digital input (DI) unit, a digital output (DO) unit, an analog output (AI) unit, an analog output (AO) unit, a pulse catch input unit, and a complex unit in which plural types of units are combined with each other. The safety I/O unit is responsible for I/O processes related to the safety control.

The power unit 450 supplies power at a predetermined voltage to each unit configuring the controller system 1.

### <B. Hardware configuration example of each unit>

Next, a hardware configuration example of each unit configuring the controller system 1 according to this embodiment will be described.

### (b1: Control unit 100)

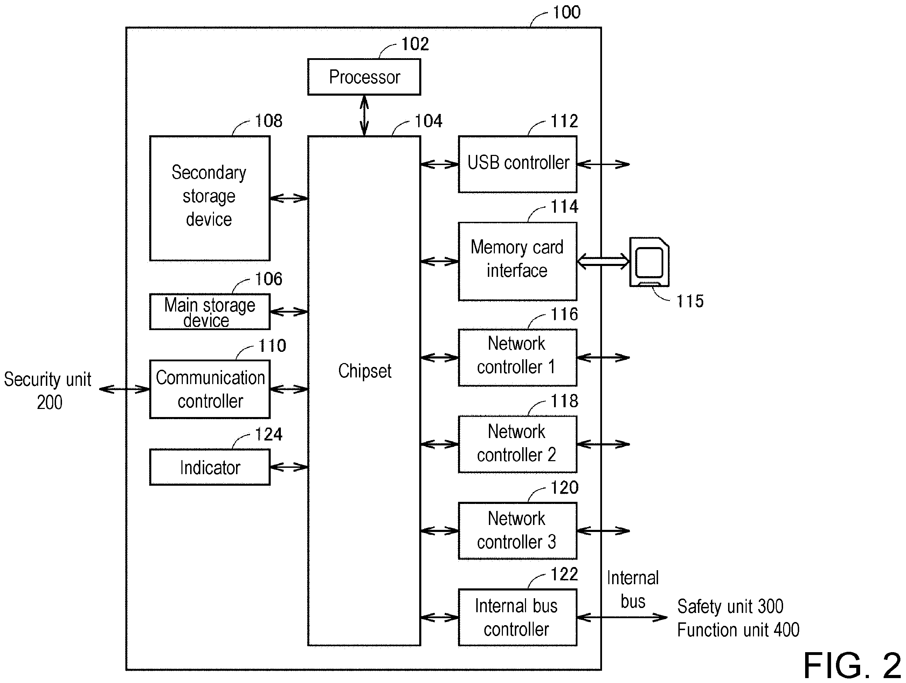

Figure 2 is a schematic view showing a hardware configuration example of the control unit 100 configuring the controller system 1 according to this embodiment. Referring to Figure 2, the control unit 100 includes, as principal components, a processor 102 such as a central processing unit (CPU) or a graphical processing unit (GPU), a chipset 104, a main storage device 106, a secondary storage device 108, a communication controller 110, a Universal Serial Bus (USB) controller 112, a memory card interface 114, network controllers 116, 118, and 120, an internal bus controller 122, and an indicator 124.

The processor 102 reads various programs stored in the secondary storage device 108, loads the programs to the main storage device 106, and executes the programs to realize control calculation related to the standard control and various processes to be described later. The chipset 104 mediates the exchange of data between the processor 102 and each component to realize the overall process in the control unit 100.

The secondary storage device 108 stores not only a system program but also a control program that operates on an execution environment provided by the system program.

The communication controller 110 is responsible for the exchange of data with the security unit 200. As the communication controller 110, for example, a communication chip compatible with PCI Express or Ethernet (registered trademark) may be employed.

The USB controller 112 is responsible for the exchange of data with any information processing device via USB connection.

The memory card interface 114 is configured to be detachably attached with a memory card 115, and can record the control program or data such as various settings to the memory card 115 or read the control program or the data such as various settings from the memory card 115.

Each of the network controllers 116, 118, and 120 is responsible for the exchange of data with any device via a network. The network controllers 116, 118, and 120 may employ an industrial network protocol such as EtherCAT (registered trademark), EtherNet/IP (registered trademark), DeviceNet (registered trademark), or CompoNet (registered trademark).

The internal bus controller 122 is responsible for the exchange of data with the safety unit 300 and one or plurality of functional units 400 configuring the controller system 1. For the internal bus, a manufacturer-specific communication protocol may be used, or a communication protocol that is the same as or compliant with any industrial network protocol may be used.

The indicator 124 provides notifications of an operating state and the like of the control unit 100, and is configured with one or a plurality of LEDs or the like disposed on a unit surface.

Figure 2 shows the configuration example in which the necessary functions are provided by the processor 102 executing the programs, but some or all of the provided functions may be implemented by using a dedicated hardware circuit (e.g. an application specific integrated circuit (ASIC) or a field programmable gate array (FPGA)). Alternatively, main parts of the control unit 100 may also be realized by using hardware (e.g. an industrial PC based on a general-purpose PC) conforming to a general-purpose architecture. In this case, a virtualization technique may be used to execute a plurality of operating systems (OSs) having different uses in parallel and also to execute necessary applications on each OS.

### (b2: Security unit 200)

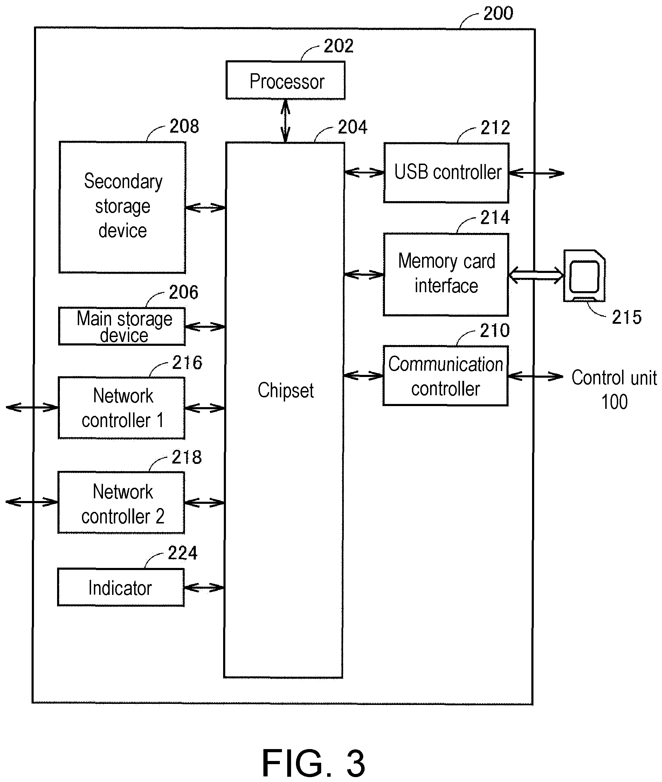

Figure 3 is a schematic view showing a hardware configuration example of the security unit 200 configuring the controller system 1 according to this embodiment. Referring to Figure 3, the security unit 200 includes, as principal components, a processor 202 such as a CPU or a GPU, a chipset 204, a main storage device 206, a secondary storage device 208, a communication controller 210, a USB controller 212, a memory card interface 214, network controllers 216 and 218, and an indicator 224.

The processor 202 reads various programs stored in the secondary storage device 208, loads the programs to the main storage device 206, and executes the programs to realize various security functions to be described later. The chipset 204 mediates the exchange of data between the processor 202 and each component to realize the overall process in the security unit 200.

The secondary storage device 208 stores not only a system program but also a security system program that operates on an execution environment provided by the system program.

The communication controller 210 is responsible for the exchange of data with the control unit 100. As the communication controller 210, for example, a communication chip compatible with, PCI Express or Ethernet (registered trademark) may be employed in the same manner as the communication controller 210 of the control unit 100.

The USB controller 212 is responsible for the exchange of data with any information processing device via USB connection.

The memory card interface 214 is configured to be detachably attached with a memory card 215, and can record the control program or data such as various settings to the memory card 215 or read the control program or the data such as various settings from the memory card 215.

Each of the network controllers 216 and 218 is responsible for the exchange of data with any device via a network. The network controllers 216 and 218 may employ a general-purpose network protocol such as Ethernet (registered trademark).

The indicator 224 provides notifications of an operating state and the like of the security unit 200, and is configured with one or a plurality of LEDs or the like disposed on a unit surface.

Figure 3 shows the configuration example in which the necessary functions are provided by the processor 202 executing the programs, but some or all of the provided functions may be implemented by using a dedicated hardware circuit (e.g. an ASIC or an FPGA). Alternatively, main parts of the security unit 200 may also be realized by using hardware (e.g. an industrial PC based on a general-purpose PC) conforming to a general-purpose architecture. In this case, a virtualization technique may be used to execute a plurality of OSs having different uses in parallel and also to execute necessary applications on each OS.

### (b3: Safety unit 300)

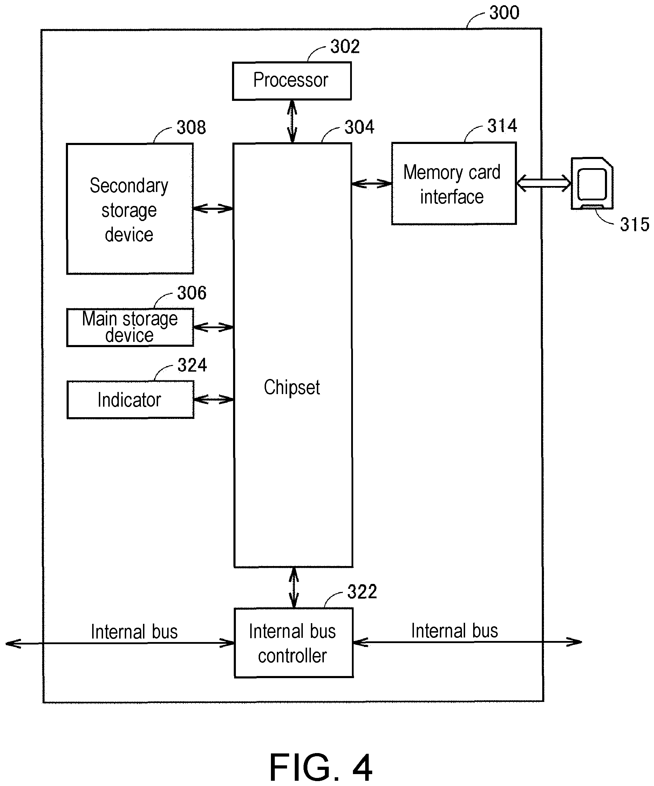

Figure 4 is a schematic view showing a hardware configuration example of the safety unit 300 configuring the controller system 1 according to this embodiment. Referring to Figure 4, the safety unit 300 includes, as principal components, a processor 302 such as a CPU or a GPU, a chipset 304, a main storage device 306, a secondary storage device 308, a memory card interface 314, an internal bus controller 322, and an indicator 324.

The processor 302 reads various programs stored in the secondary storage device 308, loads the programs to the main storage device 306, and executes the programs to realize control calculation related to the safety control and various processes to be described later. The chipset 304 mediates the exchange of data between the processor 302 and each component to realize the overall process in the safety unit 300.

The secondary storage device 308 stores not only a system program but also a safety program that operates on the execution environment provided by the system program.

The memory card interface 314 is configured to be detachably attached with a memory card 315, and can record the safety program or data such as various settings to the memory card 315 or read the safety program or the data such as various settings from the memory card 315.

The internal bus controller 322 is responsible for the exchange of data with the control unit 100 via an internal bus.

The indicator 324 provides notifications of an operating state and the like of the safety unit 300, and is configured with one or a plurality of LEDs or the like disposed on a unit surface.

Figure 4 shows the configuration example in which the necessary functions are provided by the processor 302 executing the programs, but some or all of the provided functions may be implemented by using a dedicated hardware circuit (e.g. an ASIC or an FPGA). Alternatively, main parts of the safety unit 300 may also be realized by using hardware (e.g. an industrial PC based on a general-purpose PC) conforming to a general-purpose architecture. In this case, a virtualization technique may be used to execute a plurality of OSs having different uses in parallel and also to execute necessary applications on each OS.

### <C: Confirmation of security threat countermeasure>

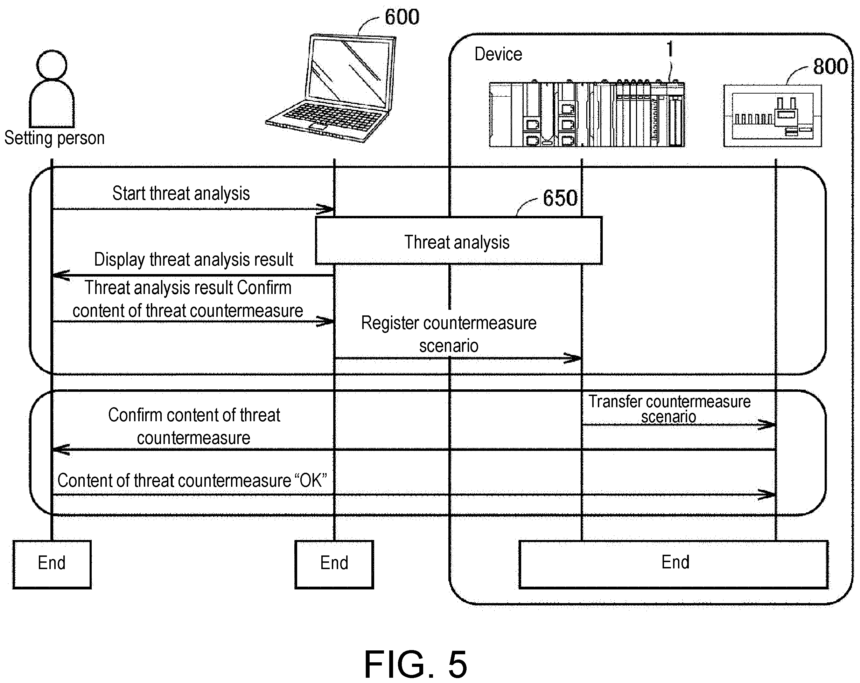

Next, confirmation when various security functions are realized in the security unit 200 described above and countermeasures are taken against security threats will be described. Figure 5 is a block diagram showing a configuration for confirming a security threat countermeasure in the controller system according to this embodiment. As shown in Figure 5, a support device 600 starts a security threat analysis 650 of the controller system 1 according to an instruction of the user (e.g. setting person). The threat analysis 650 acquires device configuration information and owned asset information from the security unit 200 to be described later, analyzes the security threats of the controller system 1, and creates a necessary countermeasure scenario. In this specification, the "countermeasure scenario" contains information on the security countermeasure in the controller system 1, and contains at least information on protected assets, security threats, and security countermeasures.

The support device 600 displays a threat analysis result containing the countermeasure scenario created in the threat analysis 650 to the user, and receives the input of a result "OK" from the user. When the support device 600 receives the input of the result "OK" from the user, the countermeasure scenario is set to the controller system 1. The controller system 1 executes the security function of the security unit 200 in accordance with the set countermeasure scenario. The process so far is a process of setting the security threat countermeasure in the controller system 1.

The subsequent process is a process of confirming the security threat countermeasure set in the above process. First, the controller system 1 transfers the countermeasure scenario to a HMI 800. The HMI 800 presents the user with the content of the countermeasure scenario and confirms the content of the security threat countermeasure. The HMI 800 terminates the process when the user confirms the content of the security threat countermeasure and receives the input of "OK". Here, the HMI 800 presents various information (e.g. contents of the countermeasure scenario) acquired through control calculation in the controller system 1 to the user (e.g. the operator), and generates an internal command or the like for the controller system 1 according to an operation from the operator. In this embodiment, although the HMI 800 is described as being included in the controller system 1, it is possible that it is not included in the controller system 1. The controller system 1 may separately provide a presentation means such as the HMI 800 for presenting the user with the contents of the countermeasure scenario.

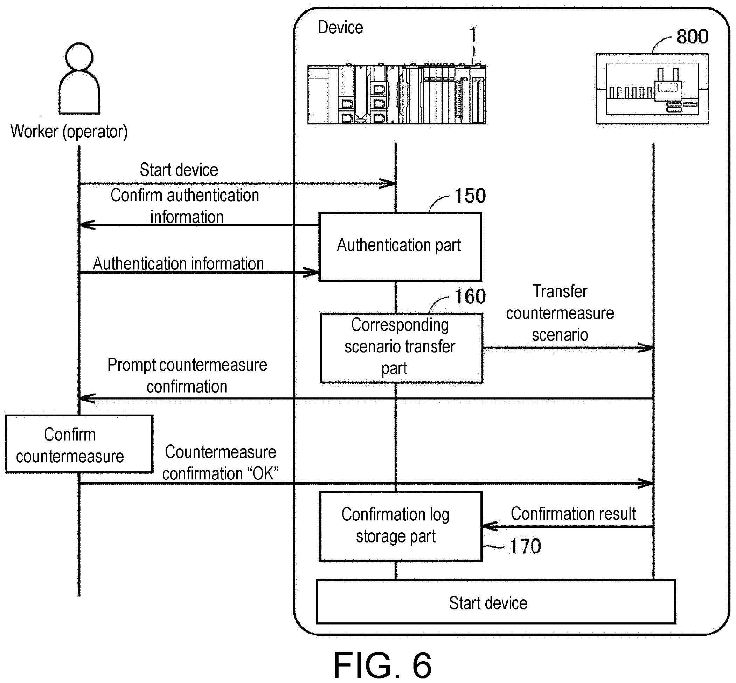

Next, the process of making the operator confirm the security threat countermeasure in the controller system will be described in detail. Figure 6 is a sequence showing a process for making an operator to confirm a security threat countermeasure in the controller system and HMI according to this embodiment. In the sequence shown in Figure 6, a typical example of a control system including the controller system 1 and the HMI 800 will be described.

First, the user starts the controller system 1. The controller system 1 includes at least the control unit 100 and the security unit 200. When the controller system 1 is launched, an authentication part 150 confirms the authentication information with the operator. Specifically, the authentication part 150 asks the operator to input an ID and a password. When the authentication part 150 receives the authentication information from the operator, a countermeasure scenario transfer part 160 transfers the security countermeasure scenario to the HMI 800. When the HMI 800 receives the transfer of the security countermeasure scenario from the countermeasure scenario transfer part 160, it presents the countermeasure scenario and prompts the operator to confirm the security countermeasure. The HMI 800, which is an example of the presentation means, presents the operator with the point requiring the security countermeasure in the controller system 1 in accordance with the countermeasure scenario.

The countermeasures contained in the countermeasure scenario include countermeasures that are based on the security functions of the security unit 200 (e.g. IDS (intrusion detection system)-isolation, filtering, etc.) and countermeasures that are based on the operations not using the security functions (e.g. blocking wired communication/port and the like). In particular, the countermeasures that are based on the operations are not countermeasures taken by the security unit 200, so it is necessary for the operator to confirm and take the countermeasures. Therefore, by presenting the operator with the point requiring the countermeasure that is based on the operation by the HMI 800, the operator can easily grasp the countermeasure that is based on the operation, and omission of the countermeasure that is based on the operation can be prevented.

When the operator confirms the countermeasure scenario presented to the HMI 800, the HMI 800 receives the information of the countermeasure confirmation "OK" from the operator. When the HMI 800 receives the information of the countermeasure confirmation "OK" from the operator, the information of the confirmation result is output to a confirmation log storage part 170 of the controller system 1. The confirmation log storage part 170 stores that the operator has confirmed the countermeasure scenario (confirmation operation) as a confirmation log (confirmation history). The IT department of a factory is required by standards and the like to conduct security education for the organization, and by taking the confirmation history that the operator confirmed the countermeasure scenario in the confirmation log storage part 170, it can be taken as the attendance history of the security education. Therefore, by storing the confirmation log in the confirmation log storage part 170, the man-hours for conducting security education can be reduced, and the man-hours for confirming countermeasures at the manufacturing site can be reduced.

After the confirmation log is stored by the confirmation log storage part 170, the controller system 1 starts a normal launching process.

### <D: Specific example of confirmation of threat countermeasure>

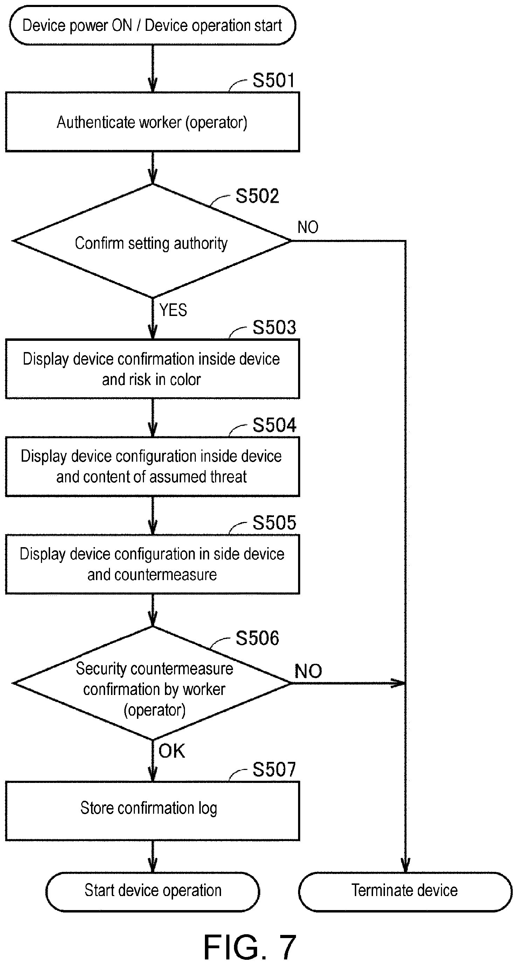

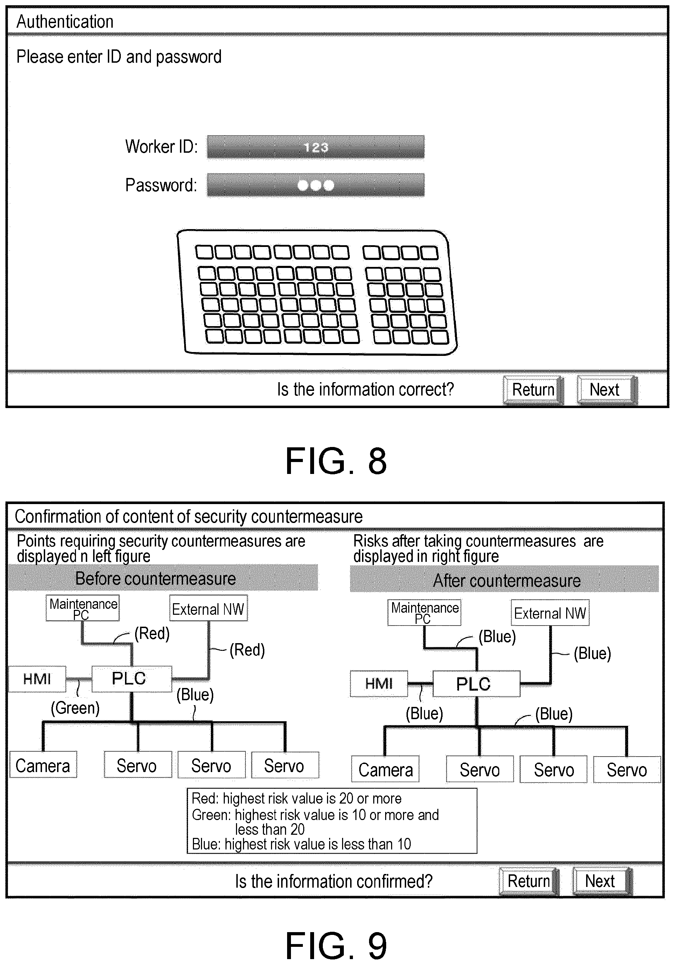

Next, Figure 7 is a flowchart showing a process of making the operator to confirm the security threat countermeasure in the controller system and the HMI according to this embodiment. First, the controller system 1 performs a process of authenticating a worker (operator) (step S501). Figure 8 is a screen for authentication confirmation displayed on the HMI 800 in step S501. On the screen shown in Figure 8, fields for entering the worker ID and password are displayed, prompting the authentication confirmation.

Returning to Figure 7, the controller system 1 confirms the setting authority of whether or not the worker ID and password entered in Figure 8 are correct (step S502). If the worker ID and password are incorrect (NO in step S502), the controller system 1 shuts down the device.

On the other hand, if the worker ID and password are correct (YES in step S502), the controller system 1 displays the device configuration inside the device and the security risk in color (step S503). Figure 9 is an example of a screen for confirming the contents of the security countermeasures displayed on the HMI 800 in step S503. On the screen shown in Figure 9, the points requiring security countermeasures are displayed in the left figure, and the right figure shows that risks are reduced by taking the countermeasures.

In Figure 9, the device configuration (device configuration inside the device) is schematically shown such that the operator can easily grasp the device configuration for which security countermeasures are taken, and the points requiring security countermeasures are identified (color-coded) and shown. In Figure 9, since colors cannot be displayed, they are expressed in parentheses. Specifically, in the left figure of Figure 9, the lines between the maintenance PC and the PLC and between the external network (NW) and the PLC are shown in red, indicating the points of high security threat. The line between the HMI and PLC is shown in green, indicating the point of moderate security threat. The lines between the camera, servos, and PLC are shown in blue, indicating the points of low security threat.

The color coding of security threats is determined according to a risk value (an index indicating the risk against security threat) contained in the countermeasure scenario. For example, the highest risk value of the protected assets contained between the maintenance PC and the PLC is 20 or more, so the security threat is displayed in red. The highest risk value of the protected assets contained between the HMI and the PLC is 10 or more and less than 20, so the security threat is displayed in green. The highest risk value of the protected assets contained between the camera, the servos, and the PLC is less than 10, so the security threat is displayed in blue. In this way, by displaying the points requiring security countermeasures in a color-coded manner on the schematic view showing the device configuration of the controller system 1, the operator can easily grasp the points requiring security countermeasures.

Further, the right figure of Figure 9 also shows a security threat when the countermeasures are taken in accordance with the countermeasure scenario. The lines between the maintenance PC and the PLC, between the external network (NW) and the PLC, and between the HMI and the PLC are shown in blue. As a result, the operator can easily grasp that the security countermeasures are effectively taken by taking the countermeasures in accordance with the countermeasure scenario.

A camera connected to the PLC (the control unit 100) and a plurality of servos is a sensor or a detector that collect various information necessary for control calculation from the control target and an actuator that applies any action to the control target, and the like, and is also referred to as a field device. The control unit 100 of the controller system 1 is connected to one or a plurality of field devices 500 via a communication port (the network controller 118 in Figure 2).

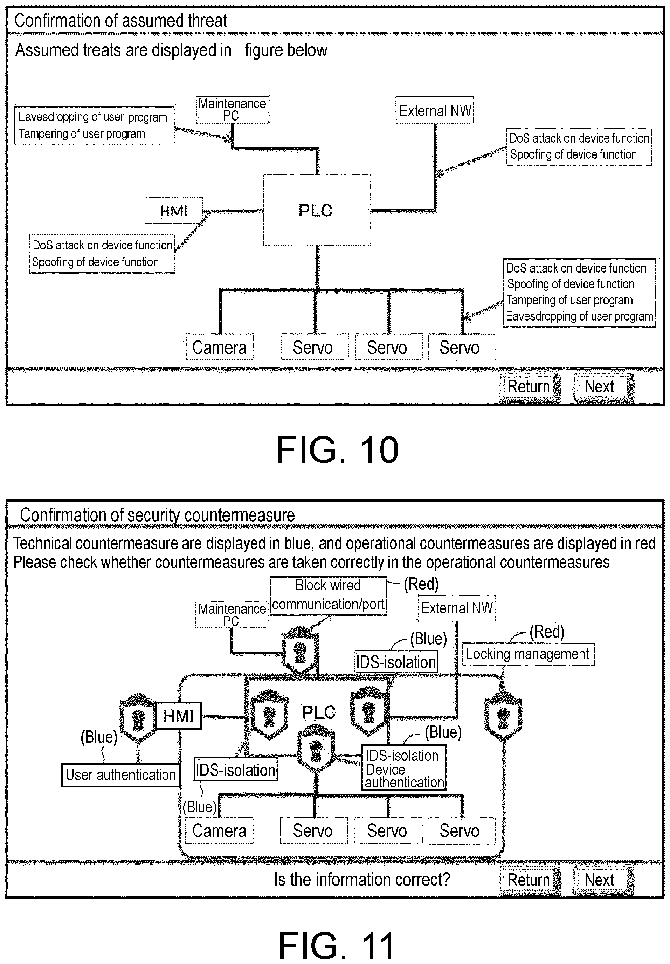

Returning to Figure 7, the controller system 1 displays the device configuration inside the device and the content of the assumed security threats (step S504). Figure 10 is an example of a screen for confirming the assumed threats displayed on the HMI 800 in step S504. On the screen shown in Figure 10, the contents of the threats are displayed at the points with assumed security threats.

In Figure 10, the security threats are shown in balloons in the device configuration schematically shown such that the operator can easily grasp the contents of the security threats. Specifically, in Figure 10, eavesdropping of a user program and tampering of the user program are shown as security threats between the maintenance PC and the PLC. DoS attacks on the device function and identity thefts of the device function are shown as security threats between the external network (NW) and the PLC and between the HMI and the PLC. The DoS attack on device function, identity theft of device function, tampering of control data, and eavesdropping of control data are illustrated as security threats between the camera, the servos, and the PLC.

Returning to Figure 7, the controller system 1 displays the device configuration inside the device and the security countermeasures (step S505). Figure 11 is an example of a screen for confirming the security countermeasures displayed on the HMI 800 in step S505. On the screen shown in Figure 11, the contents of the countermeasures are displayed at the points where the security countermeasures are to be taken.

In Figure 11, marks for security countermeasures and the contents of the countermeasures are shown on a schematic view of the device configuration such that the operator can easily grasp the points where the security countermeasures are to be taken and the contents of the countermeasures. In Figure 11, since colors cannot be displayed, they are expressed in parentheses. Specifically, in Figure 11, a security countermeasure mark displayed between the maintenance PC and the PLC is displayed, and a balloon from the mark shows "blocking wired communication/port" in red. Further, security countermeasure marks are also displayed between the external network (NW) and the PLC and between the HMI and the PLC, and these marks are shown in blue with balloons saying "IDS-isolation". Security countermeasure marks displayed between the camera, the servos, and the PLC are shown in blue with balloons saying "IDS-isolation" and "device authentication".

Furthermore, a security countermeasure mark is displayed in an area surrounding the PLC, the HMI, the camera, and the servos, and the mark is shown in red with a balloon saying "locking management". The color coding of the balloon is determined according to the content of the countermeasure contained in the countermeasure scenario, the countermeasures (technique countermeasure) that are based on the security functions of the security unit 200 are displayed in blue, and the countermeasures that are based on the operations not using the security functions are displayed in red. In the countermeasure that is based on the security function of the security unit 200, it is automatically activated and the countermeasure is executed by setting the security unit 200. For example, between the external network (NW) and the PLC, the security unit 200 implements "IDS-quarantine" countermeasures. Here, "IDS-isolation" is a countermeasure of blocking communication by an intrusion detection system, which is one of the security functions of the security unit 200, and isolating it from other equipment.

On the other hand, the countermeasures that are based on the operations not using the security functions are the contents that the operator actually performs the work and takes countermeasures, and since the security unit 200 does not automatically execute countermeasures, if the operator neglects to perform the work, it causes a security vulnerability. Therefore, on the screen shown in Figure 11, in addition to displaying the details of the countermeasures in red to indicate to the operator that the work is required to implement the countermeasures that are based on the operations, and as a reminder to prevent forgetting to take the countermeasure, a note saying "Please check whether countermeasures are taken correctly in the operational countermeasures" is displayed. Specifically, when " blocking wired communication/port" is displayed between the maintenance PC and the PLC, the operator physically blocks the unused ports among the ports for connecting the maintenance PC and the PLC.

Returning to Figure 7, the controller system 1 receives the information that the operator has confirmed the security countermeasures (step S506). If the operator has not received the information that the security countermeasures have been confirmed (NO in step S506), the controller system 1 stops the device.

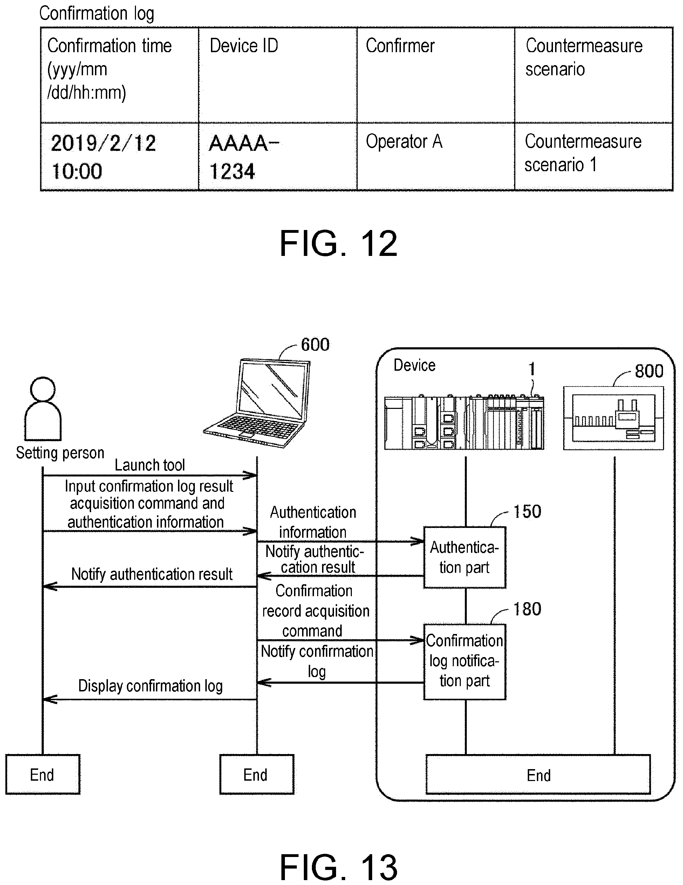

On the other hand, when the operator receives the information that the security countermeasures have been confirmed (YES in step S506), the controller system 1 stores the confirmation log in the security unit 200 (step S507). After storing the confirmation log in the security unit 200, the controller system 1 starts normal operation. Figure 12 is an example of a confirmation log indicating that the security countermeasures stored in the security unit 200 have been confirmed in step S507. In Figure 12, the confirmation log contains information on the time when the operator confirms the security countermeasure (confirmation time), the identification information of the confirmed device (device ID), the confirmer, and the version of the countermeasure scenario.

The information contained in the confirmation log shown in Figure 12 is an example, and it is set such that at least the information required by the standards and the like to carry out security education of the organization is contained. As a result, by storing the confirmation log indicating that the operator has confirmed the countermeasure scenario in step S507, it can be taken as the attendance history of security education, the man-hours for performing security education can be reduced, and the man-house for confirming the countermeasures at the manufacturing site can be reduced.

### <E: Confirmation log confirmation process>

It has been illustrated that the confirmation log indicating that the operator confirmed the countermeasure scenario was stored in step S507 of Figure 7. The process for confirming this confirmation log will be described in detail. Figure 13 is a sequence showing a process of confirming the confirmation log by the support device connected to the controller system according to this embodiment. In the sequence shown in Figure 13, a typical example of a control system including the controller system 1, the support device 600, and the HMI 800 will be described.

First, a user (e.g. setting person) launches a confirmation tool for the security unit 200 on the support device 600. When the confirmation tool is launched, the user inputs a confirmation log result acquisition command and authentication information to the support device 600. The controller system 1 confirms the authentication information with the user by the authentication part 150. Specifically, the authentication part 150 asks the user to input an ID and a password. When the authentication part 150 receives the authentication information from the user, the authentication result is transmitted to the support device 600. The support device 600 presents the user with the authentication result received from the authentication part 150.

Next, if the authentication result received from the authentication part 150 is "OK", the support device 600 transmits the confirmation log result acquisition command to a confirmation log notification part 180. When the confirmation log notification part 180 receives the confirmation log result acquisition command from the support device 600, it notifies the confirmation log stored in the support device 600. The support device 600 displays the confirmation log notified from the confirmation log notification part 180 to the user.

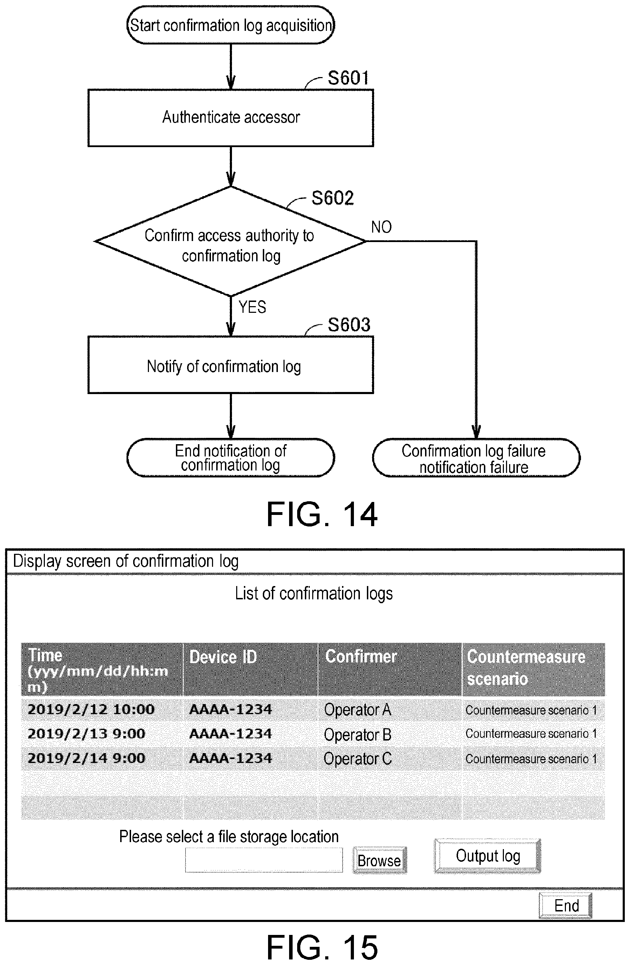

Next, Figure 14 is a flowchart showing a process of confirming the confirmation log by the support device connected to the controller system according to this embodiment. First, the controller system 1 performs a process of authenticating a user (e.g. setting person) who is an accessor (step S601). The screen for authentication confirmation displayed on the HMI 800 in step S601 is the same as the screen shown in Figure 8, and the fields for entering the ID and password are displayed to prompt the authentication confirmation.

The controller system 1 confirms whether or not the input ID and password are correct and whether or not the ID has access authority to the confirmation log (step S602). If the ID and password are incorrect, or if the ID does not have access authority to the confirmation log (NO in step S602), as a confirmation log notification failure, the controller system 1 does not notify the support device 600 of the confirmation log.

On the other hand, if the ID and password are correct and the ID has access authority to the confirmation log (YES in step S602), the controller system 1 notifies the support device 600 of the confirmation log (step S603). As a result, the controller system 1 terminates the confirmation log notification process. Figure 15 is an example of a display screen of the confirmation log that is notified to the support device 600 in step S603 and displayed by the support device 600. On the screen shown in Figure 15, a list of confirmation logs notified from the controller system 1 is displayed.

In Figure 15, the confirmation log contains information on the times when the operator confirmed the security countermeasure, the identification information (device ID) of the confirmed device, the confirmer, and the version of the countermeasure scenario. The information contained in the confirmation log shown in Figure 15 is an example, and it is set such that at least the information required by the standards and the like to carry out security education of the organization is contained. As a result, by storing the confirmation log indicating that the operator has confirmed the countermeasure scenario in step S603, it can be taken as the attendance history of security education, and the man-hours for confirming the countermeasures at the manufacturing site can be reduced.

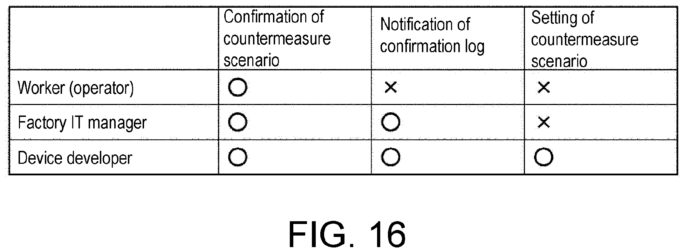

In the controller system 1, the processing of confirming and editing the countermeasure scenario and the processing of the confirmation log notification differs depending on the access authority of the input ID. Figure 16 is a view showing the difference in processing depending on the access authority. As shown in Figure 16, it is possible for the user to execute the process even if the user is an operator, a factory IT manager, or a device developer, as long as the countermeasure scenario is confirmed. However, only the factory IT manager and the device developer may notify the confirmation log. Furthermore, the setting of countermeasure scenario is limited to device developers. As a result, editing of the countermeasure scenario can be restricted by the user's authority, such that unauthorized editing can be prevented, and security management according to the access authority becomes possible.

### <F: Setting of security functions>

As described above, in the controller system 1 according to this embodiment, the user (e.g. the operator) is made to confirm the set countermeasure scenario, and the confirmation log is stored. An example of the countermeasure scenario setting process will be described in detail below. The countermeasure scenario setting process is not limited to the following process, and the security threat of the controller system 1 may be analyzed by any process to create a necessary countermeasure scenario.

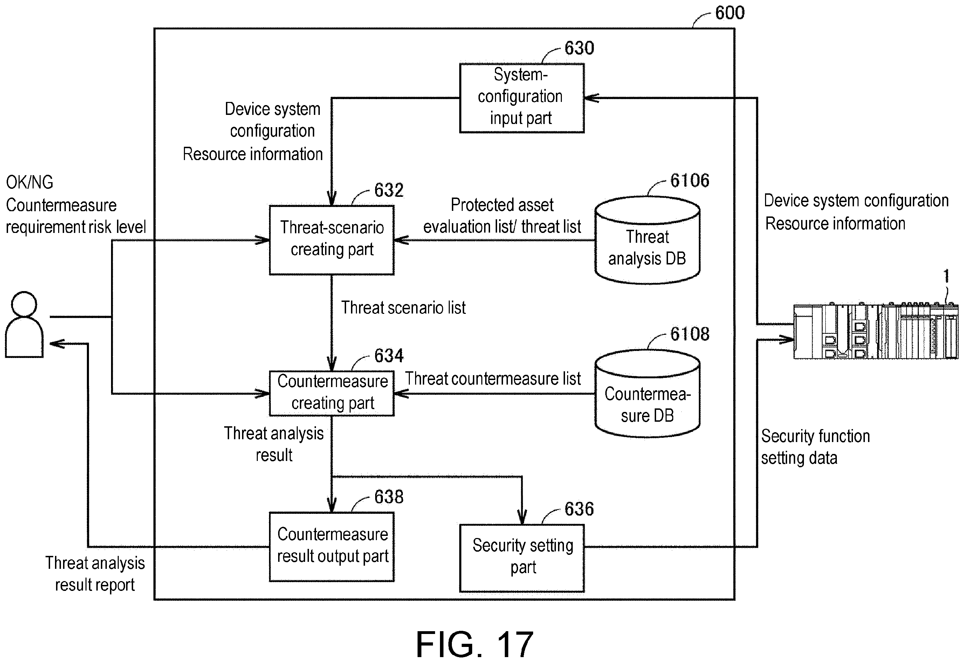

An example of processing when performing setting for realizing various security functions in the security unit 200 will be described. Figure 17 is a block diagram showing a system configuration for performing security setting by a support device connected to a controller system according to this embodiment. As shown in Figure 17, the support device 600 includes a system-configuration input unit 630, a threat-scenario creating part 632, a countermeasure creating part 634, and a security setting part 636. The support device 600 further includes a threat analysis database 6106 and a countermeasure database 6108. However, it is also possible that the threat analysis database 6106 and the countermeasure database 6108 are not provided in the support device 600 but are provided in an external server.

First, the support device 600 acquires device configuration (device system configuration) information and owned asset information (including resource information of the security unit 200) from the controller system 1 by the system-configuration input unit 630. According to the device configuration and the protected assets acquired by the system-configuration input unit 630, the threat-scenario creating part 632 creates a threat scenario from importance levels and threat levels of the threat analysis database 6106. In this specification, the "importance level" is an index indicating the importance of the protected assets constituting the controller system 1 and may be set by the user. In this specification, the "threat level" is an index indicating a security threat to the controller system 1 and may be set by the user. In this specification, the "owned assets" are devices and the like constituting the controller system 1 and include the control unit 100, the security unit 200, the field device 500, and the like.

The threat analysis database 6106 stores in advance the importance levels for the protected assets of the controller system 1 and the threat levels for the security threats. The user performs a determination of "OK" or "NG" on the threat scenario created by the threat-scenario creating part 632, and inputs the determination result to the threat-scenario creating part 632. In addition, the user may input a countermeasure requirement risk level to the threat-scenario creating part 632.

According to the threat scenario created by the threat-scenario creating part 632 and the countermeasure of the countermeasure database 6108, the countermeasure creating part 634 creates a countermeasure scenario that contains a countermeasure for each of the protected assets of the controller system 1. The countermeasure database 6108 stores in advance countermeasures corresponding to security threats. The user performs a determination of "OK" or "NG" on the countermeasure scenario created by the countermeasure creating part 634 and inputs the determination result to the countermeasure creating part 634.

According to the countermeasure scenario created by the countermeasure creating part 634, the security setting part 636 outputs setting data of security functions (security function setting data) to the security unit 200. The security unit 200 realizes various security functions according to the setting data (security function setting data). A countermeasure result output unit 638 outputs a threat analysis result including the countermeasure scenario created by the countermeasure creating part 634 to the user as a threat analysis result report.

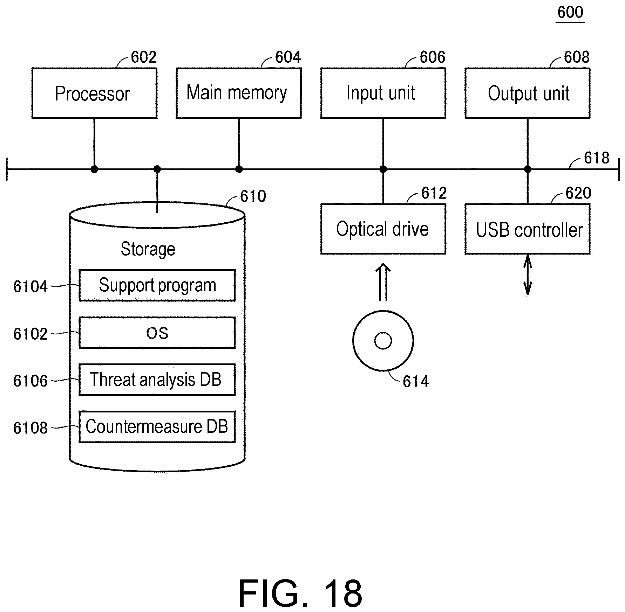

The configuration described with reference to Figure 17 is realized by a hardware configuration of the support device 600 described below. Figure 18 is a schematic view showing a hardware configuration example of the support device 600 connected to the controller system 1 according to this embodiment. As an example, the support device 600 is realized by using hardware (e.g. a general-purpose PC) conforming to a general-purpose architecture.

Referring to Figure 18, the support device 600 includes a processor 602, a main memory 604, an input unit 606, an output unit 608, a storage 610, an optical drive 612, and a USB controller 620. These components are connected to each other via a processor bus 618.

The processor 602 is configured with a CPU or a GPU, reads programs (e.g. an OS 6102 and a support program 6104) stored in the storage 610, loads the programs to the main memory 604, and executes the programs to perform a setting process or the like on the controller system 1.

The main memory 604 is configured with a volatile storage device such as a DRAM or an SRAM. The storage 610 is configured with a nonvolatile storage device such as an HDD or an SSD.

The storage 610 stores not only the OS 6102 for realizing fundamental functions but also the support program 6104 for providing functions as the support device 600. In other words, the support program 6104 is executed by a computer connected to the controller system 1 to implement the support device 600 according to this embodiment. Further, the storage 610 stores the threat analysis database 6106 and the countermeasure database 6108.

The input unit 606 is configured with a keyboard, a mouse, and the like, and receives a user operation. The output unit 608 is configured with a display, various indicators, a printer, and the like, and outputs a processing result or the like from the processor 602.

The USB controller 620 exchanges data with the controller system 1 or the like via USB connection.

The support device 600 has the optical drive 612, and a computer-readable program is read from a recording medium 614 (e.g. an optical recording medium such as a digital versatile disc (DVD)) that stores the program in a non-transitory manner and is installed in the storage 610 or the like.

The support program 6104 or the like executed by the support device 600 may be installed via the computer-readable recording medium 614, or may be downloaded from a server device or the like on the network to be installed. The functions provided by the support device 600 according to this embodiment may be realized in a form of using some modules provided by the OS.

Figure 18 shows a configuration example in which the necessary functions as the support device 600 are provided by the processor 602 executing the programs, but some or all of the provided functions may also be implemented by using a dedicated hardware circuit (e.g. an ASIC or an FPGA).

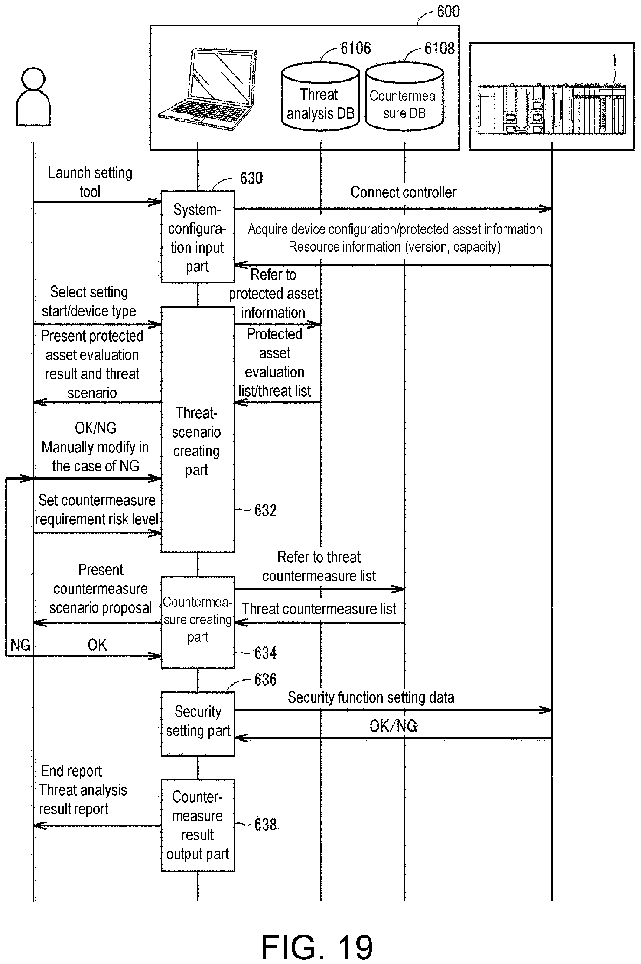

Next, the threat analysis and the security setting performed during device development and device launching in the system configuration for performing security setting by the support device 600 will be described in detail. Figure 19 is a sequence showing threat analysis and the security setting in the controller system and the support device according to this embodiment. In the sequence shown in Figure 19, a typical example of a control system including the controller system 1 and the support device 600 will be described.

First, the user launches a setting tool of the security unit 200 by the support device 600. When the setting tool is launched, the system-configuration input unit 630 makes an inquiry to the controller system 1. In response to the inquiry from the system-configuration input unit 630, the controller system 1 returns the device configuration information and the owned asset information of the controller system 1 to the system-configuration input unit 630. The system-configuration input unit 630 acquires device configuration information and owned asset information from the controller system 1. Further, the system-configuration input unit 630 acquires resource information of the security unit 200 such as software and hardware version information and resource capacity from the security unit 200.

The user selects start of setting of the security unit 200 by the support device 600, and when the device type is selected, the threat-scenario creating part 632 creates a threat scenario list from the importance levels and the threat levels of the threat analysis database 6106 according to the device type. Specifically, the threat-scenario creating part 632 creates an owned asset evaluation list and a threat list by referring to the information of the threat analysis database 6106, and presents to the user a threat scenario list based on the owned asset evaluation list and the threat list. The threat-scenario creating part 632 may also create a threat scenario list from the importance levels and the threat levels of the threat analysis database 6106 regardless of the device type.

The user performs a determination of "OK" or "NG" on the presented threat scenario list and inputs the determination result to the threat-scenario creating part 632. When the threat scenario list is "NG", the user may manually modify it. In addition, the user may input a countermeasure requirement risk level to the threat-scenario creating part 632. In the support device 600, countermeasures corresponding to the security threats may be created according to the countermeasures requirement risk level.

According to the threat scenario list created by the threat-scenario creating part 632 and the countermeasures of the countermeasure database 6108, the countermeasure creating part 634 creates a countermeasure scenario that contains a countermeasure for each of the protected assets of the controller system 1. Referring to a threat countermeasure list stored in the threat analysis database 6106, the countermeasure creating part 634 determines the countermeasure for each threat in the threat scenario list and creates a countermeasure scenario.

The countermeasure creating part 634 presents the created countermeasure scenario to the user. The user performs a determination of "OK" or "NG" on the countermeasure scenario created by the countermeasure creating part 634 and inputs the determination result to the countermeasure creating part 634. When the countermeasure scenario is "NG", the process returns to the threat-scenario creating part 632, and the user may manually modify the threat scenario list.

According to the countermeasure scenario created by the countermeasure creating part 634, the security setting part 636 outputs setting data of security functions (security function setting data) to the security unit 200. The security unit 200 realizes various security functions according to the setting data (security function setting data). When the setting is completed according to the setting data (security function setting data), the security unit 200 returns "OK" information to the security setting part 636, and when the setting is incomplete, the security unit 200 returns "NG" information to the security setting part 636.

The countermeasure result output unit 638 outputs a threat analysis result including the countermeasure scenario created by the countermeasure creating part 634 to the user as a threat analysis result report. Accordingly, the control system can analyze the security threats with the support device 600 and easily take countermeasures against the threats.

### <G: Creation of threat scenario list and countermeasure scenario>

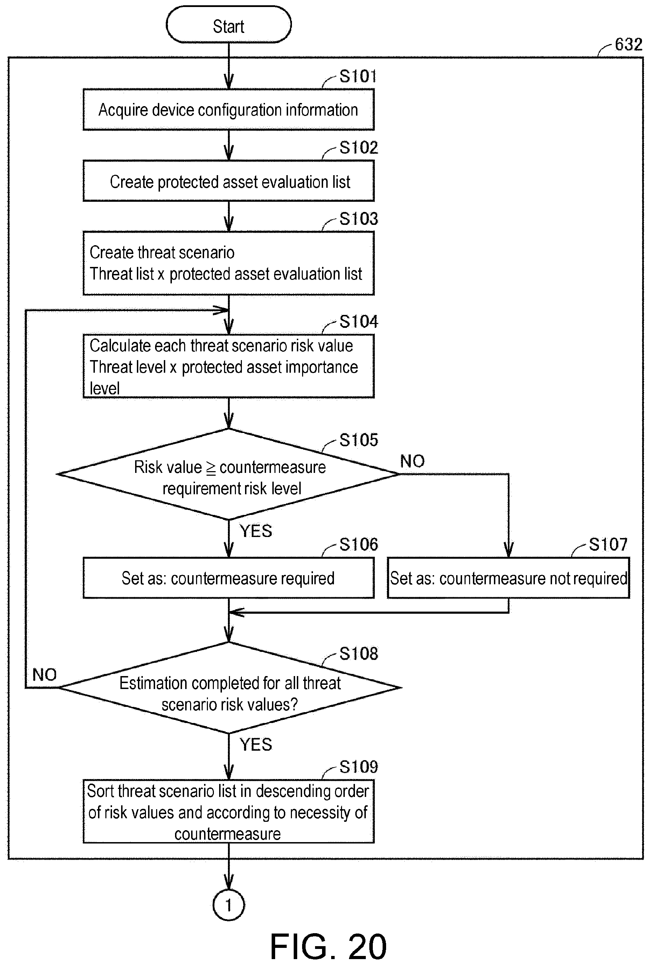

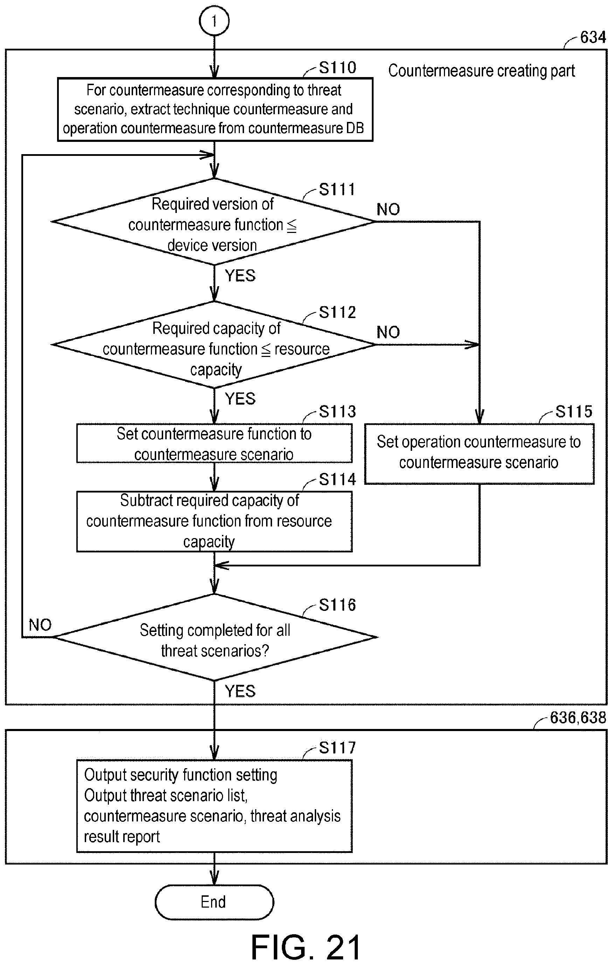

Next, Figure 20 is a flowchart showing a processing procedure of creating a threat scenario list in the support device 600 according to this embodiment. Further, Figure 21 is a flowchart showing a processing procedure of creating a countermeasure scenario in the support device 600 according to this embodiment. First, when the process shown in Figure 20 is started, the support device 600 acquires device configuration information by the system-configuration input unit 630 (step S101). Since the purpose of control and important items differ depending on the type of device controlled by the controller system 1, the security functions to be set also differ.

For example, if the device controlled by the controller system 1 is a semiconductor manufacturing device, since people basically do not enter near the device in the manufacturing process, it is important to maintain control of the device. On the other hand, if the device controlled by the controller system 1 is a press device, since people basically perform operations near the device in the manufacturing process, it is important that the device is reliably stopped in an emergency to protect human safety. Therefore, in the case of a semiconductor manufacturing device, security functions of configurations required to maintain control of the device are preferentially set, and in the case of a press device, security functions of the configurations required to reliably stop the device are preferentially set.

In step S101, the system-configuration input unit 630 makes an inquiry to the controller system 1 about the device configuration information and the owned asset information, and acquires the device configuration information and the owned asset information from the controller system 1. Further, based on device type (e.g. a semiconductor manufacturing device, a press device, etc.) information selected by the user, the system-configuration input unit 630 creates a device configuration as shown in Figure 9 from the device configuration information and the owned asset information.

Next, according to the device configuration and the protected assets acquired by the system-configuration input unit 630, the support device 600 creates a protected asset evaluation list by the threat-scenario creating part 632 (step S 102). Specifically, the threat-scenario creating part 632 concatenates a protected asset list for each function in the threat analysis database 6106 for the configuration components acquired in step S101.

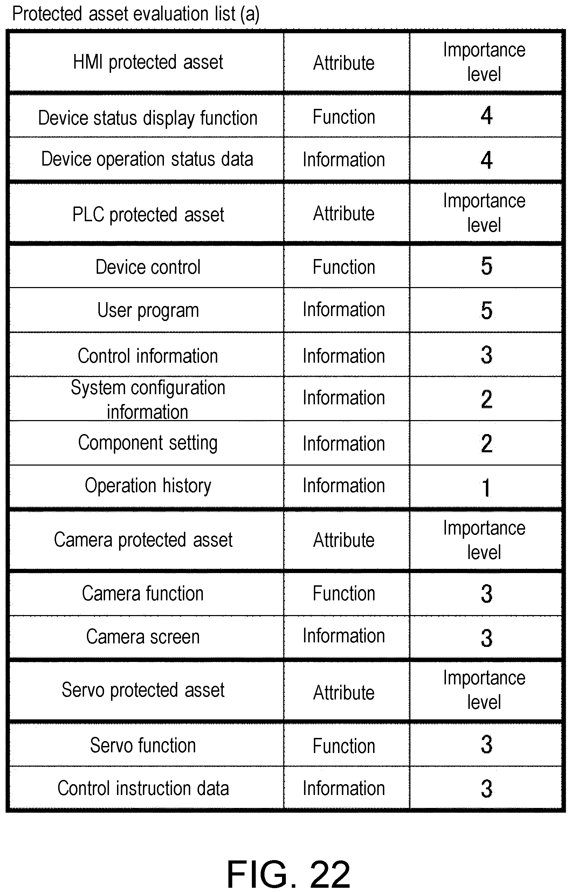

For example, in the case of the semiconductor manufacturing device, assuming that the device configuration includes an HMI, a PLC, a camera, and servos, the threat-scenario creating part 632 takes out and concatenates a list of the HMI protected asset, the PLC protected asset, the camera protected asset, and the servo protected asset from the protected asset list in the threat analysis database 6106. Figure 22 is a view showing an example of a protected asset evaluation list created by the support device according to this embodiment. Figure 22 shows a protected asset evaluation list (a) in the case of a semiconductor manufacturing device. The protected asset evaluation list (a) contains the attributes and importance levels of the HMI protected asset, the PLC protected asset, the camera protected asset, and the servo protected asset.

Since the important items differ between the semiconductor manufacturing device and press device in the protected asset evaluation list, for example, the importance level may also differ. For example, in the protected asset evaluation list of the semiconductor manufacturing device, the importance level of the user program of the PLC protected asset is increased in order to maintain the control of the device, and in the protected asset evaluation list of the press device, the importance levels of the servo function and control instruction data of the servo protected asset are increased in order to reliably stop the device.

After the protected asset evaluation list is created, the threat-scenario creating part 632 creates a threat scenario as shown in Figure 20 (step S 103). When creating the threat scenario in step S103, it is necessary for the threat-scenario creating part 632 to first create a threat list. Specifically, the threat-scenario creating part 632 concatenates a threat list of assumed attack spots in the threat analysis database 6106 to the configuration components acquired in step S101.

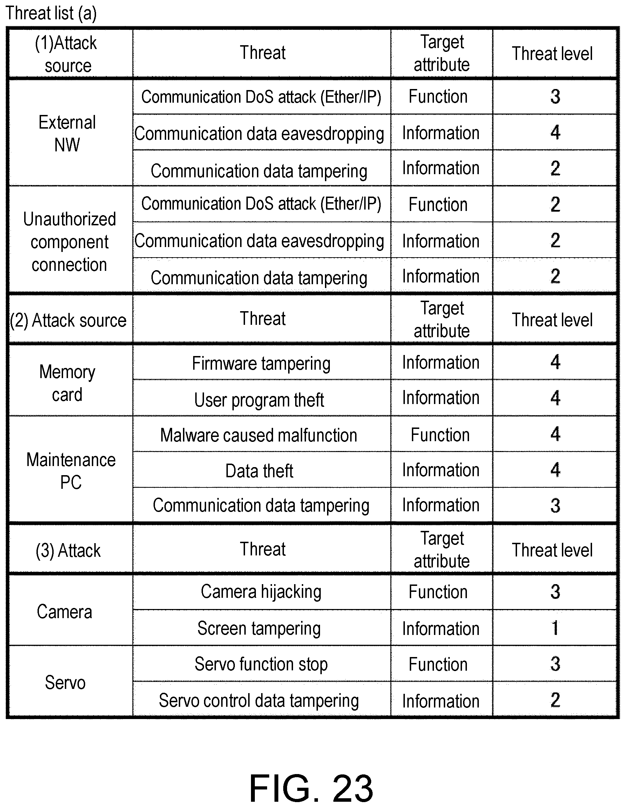

For example, in the case of the semiconductor manufacturing device, assuming that the device configuration includes an HMI, a PLC, a camera, and servos, the threat-scenario creating part 632 takes out and concatenates the threat list of assumed attack spots that are predetermined for the protected assets of the HMI, the PLC, the camera, and the servo from the threat list for each attack spot in the threat analysis database 6106. Figure 23 is a view showing an example of a threat list created by the support device according to this embodiment. Figure 23 shows a threat list (a) in the case of the semiconductor manufacturing device. As assumed attack spots for the protected assets of the HMI, the PLC, the cameras, and the servo, the threat list (a) contains threats, target attributes, and threat levels of an external network, an unauthorized component connection, a memory card, a maintenance PC, a camera, and a servo.

Here, in this specification, "threat" means any event that prevents the equipment or machine from operating normally. In a control device centered on a PLC, typical threats may include threats from four aspects: (1) attack from a higher-level device such as a database, (2) attack from a field device, (3) attack via a support device, and (4) attack via a storage medium (e.g. a memory card) mounted on the control device. In addition, for all physical ports mounted on the controller, there is a security risk of being attacked.

For example, the assumed attack spot of the external network shown in Figure 23 is classified into "(1) attack from a higher-level device such as a database", and specific threats include "communication DoS (distributed denial of service) attack", "communication data eavesdropping", and "communication data tampering". "Communication DoS attack" is an attack that sends a large number of packets to the communication address of an attack target and only affects the communication function with the outside, and it is often possible to operate the device itself. Therefore, in "communication DoS attack", the target attribute is "function" and the threat level is set to "3".

"Communication data eavesdropping" is an attack that intercepts communication via a network device to snoop on the data during communication, and only leaks information and does not affect the function of the device. Therefore, in "communication data eavesdropping", the target attribute is "information" and the threat level is set to "4". "Communication data tampering" is an attack that tampers with data during communication via a network device and is a threat to information. In "communication data tampering", the target attribute is "information" and the threat level is set to "2".

Further, the assumed attack spot of the memory card shown in Figure 23 is classified into "(4) attack via a storage medium (e.g. a memory card) mounted on the control device", and specific threats include "firmware tampering" and "user program theft". "Firmware tampering" is, for example, an attack that tampers with the updated firmware of the control unit 100 to write a program of unauthorized operation, and is a threat to information. Therefore, in "firmware tampering", the target attribute is "information" and the threat level is set to "4". "User program theft" is an attack that steals a user's program and reuses it on another machine, and is an information leak. Therefore, in "user program theft", the target attribute is "information" and the threat level is set to "4".

Further, the assumed attack spot of the maintenance PC shown in Figure 23 is classified into "(3) attack via a support device", and specific threats include "malware caused malfunction", "data theft", and "communication data tampering". "Malware caused malfunction" is, for example, an attack that infects the control unit 100 with malware to cause the control unit 100 to malfunction, and is a threat to information. Therefore, in "malware caused malfunction", the target attribute is "function" and the threat level is set to "4". "Data theft" is an attack that steals data of a device and reuses it on another machine, and is an information leak. Therefore, in "data theft", the target attribute is "information" and the threat level is set to "4". "Communication data tampering" is an attack that tampers with data during communication via a network device and is a threat to information. In "communication data tampering", the target attribute is "information" and the threat level is set to "3".

Further, the assumed attack spots of the camera and the servo shown in Figure 23 are classified into "(2) attack from a field device", and specific threats include "camera hijacking", "screen tampering", "servo function stop", and "servo control data tampering". "Camera hijacking" is an attack on the control unit 100 by a user who does not have the operation authority but maliciously operates the camera, and is a threat to the function of the control unit 100. Therefore, in "camera hijacking", the target attribute is "function" and the threat level is set to "3".

"Screen tampering" is an attack that tampers with a screen captured by a camera and is a threat to information. In "screen tampering", the target attribute is "information" and the threat level is set to "1". "Servo function stop" is an attack in which a user without operating authority maliciously stops the servo function and hinders the servo control 100 from performing servo control, and is a threat to the function of the control unit 100. Therefore, in "servo function stop", the target attribute is "function" and the threat level is set to "3". "Servo control data tampering" is an attack that tampers with the data required for servo control and is a threat to information. In "servo control data tampering", the target attribute is "information" and the threat level is set to "2".

Since the important items differ between the semiconductor manufacturing device and the press device, the threat levels contained in the same threat may also differ. For example, in the threat list of the press device, the threat levels for the threats of the memory card and the maintenance PC are increased in order to reliably stop the device.

It has been described that the threat list contains the threat, the target attribute, and the threat level for each assumed attack spot as shown in Figure 23. However, the information contained in the threat list is not limited thereto, and may also include, for example, software and hardware version information of the control unit 100 or the security unit 200. Since the control unit 100 and the security unit 200 have different security vulnerabilities depending on the software and hardware version information, it is necessary to make the threat level different depending on the version information.

Returning to Figure 20, the threat-scenario creating part 632 creates a threat scenario from the threat list and the protected asset evaluation list in step S103. The threat-scenario creating part 632 links the threat list and the protected asset evaluation list by attributes to create a combined threat scenario. The threat scenario is listed for each item that combines the protected asset and the threat. The listed threat scenario is also hereinafter referred to as a threat scenario list. The threat-scenario creating part 632 calculates a risk value for each item of the threat scenario list to be created (step S104). The risk value is an index indicating a risk for a security threat, and is, for example, calculated by integrating the threat level of the threat list and the importance level of the protected asset evaluation list by a predetermined estimation method.

The threat-scenario creating part 632 determines whether the risk value of the created threat scenario list is higher than a countermeasure requirement risk level set by the user (step S 105). When the risk value is higher than the countermeasure requirement risk level (YES in step S105), the threat-scenario creating part 632 performs a setting that a countermeasure is required for the item of the threat scenario list (step S 106). On the other hand, when the risk value is lower than the countermeasure requirement risk level (NO in step S 105), the threat-scenario creating part 632 performs a setting that a countermeasure is not required in the item of the threat scenario list that (step S107).

The threat-scenario creating part 632 determines whether the estimation on the necessity of a countermeasure is completed for all the risk values of the created threat scenario list (step S108). When the estimation on the necessity of a countermeasure is not completed for all the risk values (NO in step S108), the threat-scenario creating part 632 returns the process to step S104. When the estimation of the necessity of a countermeasure is completed for all risk values (YES in step S 108), the threat-scenario creating part 632 sorts the items in the threat scenario list in a descending order of risk values and in an order according to the necessity of a countermeasure (step S 109).

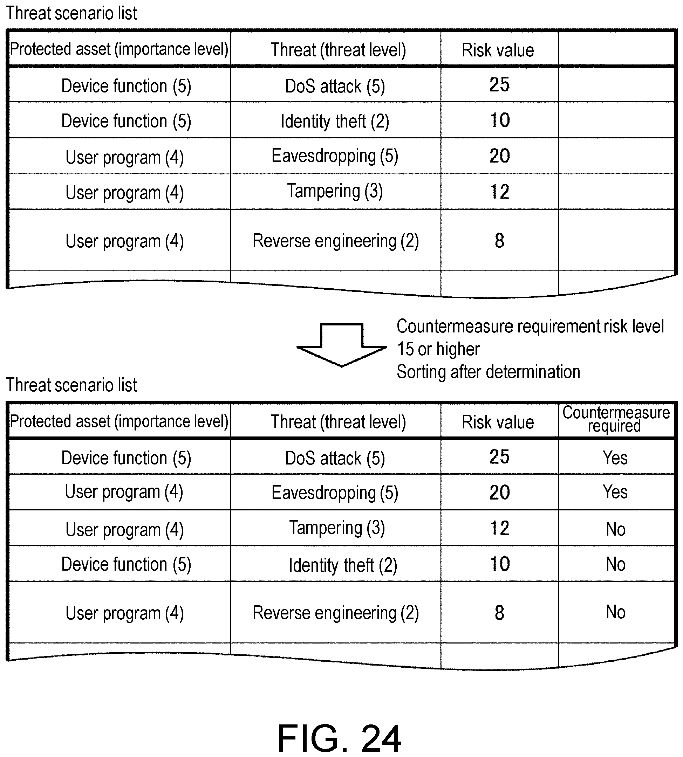

The threat scenario list created in step S 103 to step S 109 will be described with reference to specific examples. Figure 24 is a view showing an example of a threat scenario list created by the support device according to this embodiment. In the threat scenario list shown in Figure 24, a value "25" is contained as a risk value as a result of integrating the item of the device function having the importance level of "5" in the protected asset evaluation list and the item of the DoS attack having the threat level of "5". With the countermeasures requirement risk level being "15" or higher, this threat scenario list is sorted in a descending order of risk values. The sorted threat scenario list is shown at the lower side of Figure 24.

Next, the process in which the countermeasure creating part 634 creates a countermeasure scenario containing a countermeasure for each of the protected assets of the controller system 1 according to the threat scenario list created by the threat-scenario creating part 632 and the countermeasures (threat countermeasure list) of the countermeasure database 6108 will be described. Returning to Figure 21, first, the countermeasure creating part 634 extracts a countermeasure corresponding to each item of the threat scenario list from the countermeasure database 6108 (step S110). The countermeasures extracted from the countermeasure database 6108 include countermeasures that are based on the security functions of the security unit 200 and countermeasures that are based on operations not using the security functions. Of course, when the countermeasures stored in the countermeasure database 6108 are only countermeasures that are based on the security functions of the security unit 200, the countermeasures to be extracted may be only countermeasures that are based on the security functions of the security unit 200.

To take a countermeasure that is based on the security function selected from the threat countermeasure list of the countermeasure database 6108, the countermeasure creating part 634 determines whether a security unit 200 having a version equal to or higher than the version required by the security unit is provided (Step Sill). When the version is equal to or higher than the required version (YES in step Sill), the countermeasure creating part 634 determines whether a resource capacity required by the security unit for taking the countermeasure that is based on the security function is equal to or less than a resource capacity of the security unit 200 (step S112).

When the required resource capacity is equal to or less than the resource capacity of the security unit 200 (YES in step S112), the countermeasure creating part 634 sets this countermeasure that is based on the security function to an item in the threat scenario list (step S113). When the countermeasure that is based on the security function is set to an item in the threat scenario list, the countermeasure creating part 634 subtracts a resource capacity of the set countermeasure that is based on the set security function from the resource capacity of the security unit 200 (step S114).

In the case of a version lower than the required version (NO in step S 111), or in the case where the required resource capacity is greater than the resource capacity of the security unit 200 (NO in step S 112), the countermeasure creating part 634 sets a countermeasure that is based on an operation not using the security function to an item in the threat scenario list (step S115).

The countermeasure creating part 634 determines whether the setting of a countermeasure is completed for all the items in the threat scenario list (step S116). When the setting of a countermeasure is not completed for all the items (NO in step S116), the countermeasure creating part 634 returns the process to step Sill. When the setting of a countermeasure is completed for all the items (YES in step S116), the countermeasure creating part 634 creates a countermeasure scenario in which the setting of a countermeasure is completed for all the items in the threat scenario list. According to the countermeasure scenario created by the countermeasure creating part 634, the security setting part 636 outputs setting data of security functions (security function setting data) to the security unit 200 (step S117). In step S117, the countermeasure result output unit 638 outputs a threat analysis result including the countermeasure scenario created by the countermeasure creating part 634 to the user as a threat analysis result report.

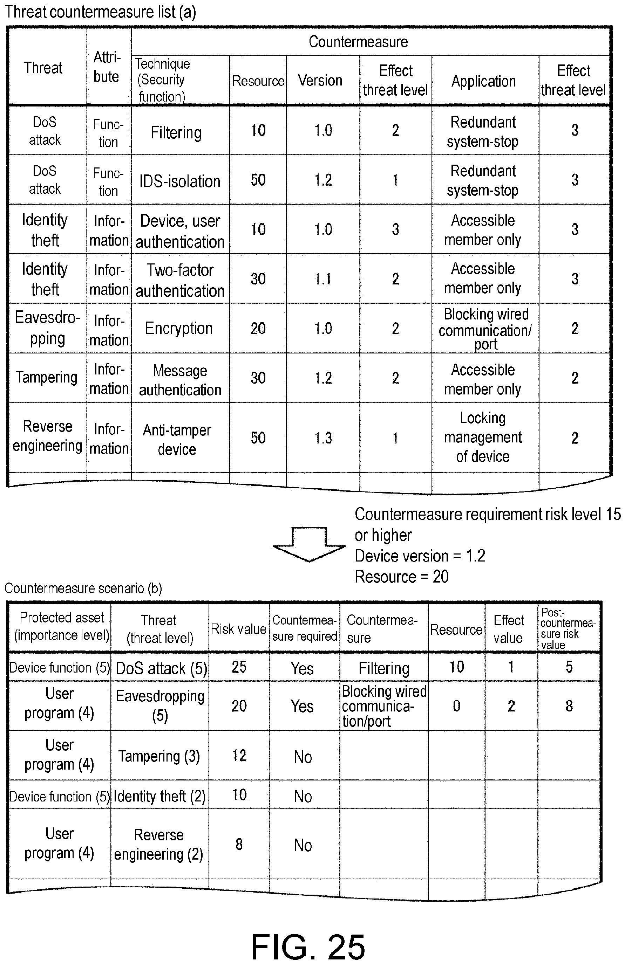

The countermeasure scenario created in step S110 to step S116 will be described with reference to specific examples. Figure 25 is a view showing an example of a countermeasure scenario created by the support device according to this embodiment. In a countermeasure scenario (b) shown in Figure 25, countermeasures selected from a threat countermeasure list (a) of the countermeasure database 6108 are set to the items of the threat scenario list shown in Figure 24. In addition to the information of the threat scenario list, the countermeasure scenario (b) contains information including a countermeasure, a resource, an effect threat level, and a post-countermeasure risk value. For example, in the item of "device function" x "DoS attack", "filtering" is contained as the countermeasure, "10" is contained as the resource, "2" is contained as the effect threat level, and " 10" is contained as the post-countermeasure risk value. Further, in the countermeasure scenario (b), since the remaining resource capacity is small, in the item "user program" x "eavesdropping", a countermeasure that is based on the operation is selected instead of a countermeasure that is based on the security function. In the countermeasure scenario (b), in the item "user program" x "eavesdropping", " blocking wired communication/port" is contained as the countermeasure, "0" is contained as the resource, "2" is contained as the effect threat level, and "8" is contained as the post-countermeasure risk value.

In the countermeasure scenario (b), the necessity of a countermeasure is determined based on whether the risk value is equal to or higher than the countermeasures requirement risk level, and assuming that the resource capacity of the security unit 200 may be equipped with all the functions, countermeasures may also be set for the items. However, in reality, the resource capacity of the security unit 200 is limited, and the selected countermeasures differ according to the resource.

Since the countermeasures (e.g. IDS-isolation, filtering, etc.) that are based on the security functions of the security unit 200 use the resource of the security unit 200, it is necessary to take countermeasures within the resource capacity. On the other hand, since the countermeasures (e.g. blocking wired communication/port) that are based on the operations do not use the resource of the security unit 200, the countermeasures may be taken without worrying about the resource capacity.

In the support device 600, to estimate the risk value of the threat scenario list created in the process of step S104, the user may select the method for estimating the risk value (e.g. importance (importance level) × threat level, etc.). Here, the risk value is not only acquired by simply integrating the importance (importance level) and the threat level, but may also be acquired by setting weights on each value and integrating them. For example, the risk value may be estimated by doubling the threat level. Further, as another estimation method, the risk value may also be estimated using general risk evaluation methods for threat analysis such as the common vulnerability scoring system (CVSS) or the risk scoring methodology for automotive system (RSMA).

### <H. Appendix>

This embodiment as described above includes the following technical ideas.

### [Configuration 1]

A controller system (1) including:
a control unit (100) that executes control calculation for controlling a control target,
a security unit (200) connected to the control unit (100) and responsible for a security function for the controller system (1), and
a presentation means (the HMI 800) that presents a user with a security countermeasure in the controller system (1) by the security unit (200),
in which the security unit (200) stores a countermeasure scenario corresponding to a threat analysis concerning a device configuration and protected assets of the controller system (1), and sets a security function in accordance with the countermeasure scenario, and
the presentation means (1) presents the user with a point requiring the security countermeasure in the controller system (1) in accordance with the countermeasure scenario.

### [Configuration 2]

The controller system (1) according to configuration 1, in which the presentation means identifies and presents the user with the point requiring the security countermeasure in the controller system (1) according to a risk to a security threat.

### [Configuration 3]

The controller system (1) according to the configuration 1 or 2, in which the presentation means presents the user with content of a threat assumed at the point requiring the security countermeasure in the controller system (1).

### [Configuration 4]

The controller system (1) according to any one of configurations 1 to 3, in which the presentation means presents the user with a point where a security function of the security unit (200) is set in accordance with the countermeasure scenario.

### [Configuration 5]

The controller system (1) according to configuration 4, in which the presentation means presents the user with a point where a countermeasure that is based on an operation not using the security function of the security unit (200) needs to be taken in accordance with the countermeasure scenario.

### [Configuration 6]

The controller system (1) according to configuration 5, in which the presentation means presents a display prompting the user to take the countermeasure that is based on the operation.

### [Configuration 7]

The controller system (1) according to any one of configurations 1 to 6, further including an authentication means (the authentication part 150) that authenticates that a user is able to access the controller system (1),
in which the presentation means presents the point requiring the security countermeasure in the controller system (1) only to the user authenticated by the authentication means in accordance with the countermeasure scenario.

### [Configuration 8]

The controller system (1) according to any one of configurations 1 to 7, further including a storage means (the confirmation log storage part 170) that stores a user's confirmation operation as a confirmation history.

### [Configuration 9]

The controller system (1) according to the configuration 8, further including a notification means (the confirmation log notification part 180) that notifies the user of the confirmation history stored in the storage means.

### [Configuration 10]

The controller system (1) according to the configuration 7, in which the countermeasure scenario presented by the presentation means is editable according to an authority of the user authenticated by the authentication means.

### [Configuration 11]

The controller system (1) according to any one of configurations 1 to 10, in which the security unit (200) performs threat analysis in a support device connected to the controller system (1) and stores the countermeasure scenario created.

### <1. Advantages >

According to the control system according to this embodiment, the user can easily grasp the countermeasures against the security threat.

It should be considered that the embodiments disclosed this time are exemplary in all respects and not restrictive. The scope of this invention is indicated by the claims, not the above description, and is intended to include all modifications within the meaning and scope of the claims.

### [Descriptions of Reference Numerals]

1 Controller system
10 Control system
100 Control unit
102, 202, 302, 602 Processor
104, 204, 304 Chipset
106, 206, 306 Main storage device
108, 208, 308 Secondary storage device
110, 210 Communication controller
112, 212, 620 USB Controller
114, 214, 314 Memory card interface
115, 215, 315 Memory card
116, 118, 120, 216, 218 Network controller
122, 322 Internal bus controller
124, 224, 324 Indicator
142, 144, 242 Communication port
200 Security unit
300 Safety unit;
400 Functional unit
450 Power unit
500 Field device
600 Support device
604 Main memory device
606 Input unit
608 Output unit
610 Storage
612 Optical drive
614 Recording medium
618 Processor bus
800 HMI
900 External network
6102 OS
6104 Support program
6106 Threat analysis database
6108 Countermeasure database

## Claims

1. A controller system comprising:
a control unit that executes control calculation for controlling a control target,
a security unit connected to the control unit and responsible for a security function for the controller system, and
a presentation means that presents a user with a security countermeasure in the controller system by the security unit,
wherein the security unit stores a countermeasure scenario corresponding to a threat analysis concerning a device configuration and protected assets of the controller system, and sets a security function in accordance with the countermeasure scenario, and
the presentation means presents the user with a point requiring the security countermeasure in the controller system in accordance with the countermeasure scenario.

2. The controller system according to claim 1, wherein the presentation means identifies and presents the user with the point requiring the security countermeasure in the controller system according to a risk to a security threat.

3. The controller system according to claim 1 or 2, wherein the presentation means presents the user with content of a threat assumed at the point requiring the security countermeasure in the controller system.

4. The controller system according to any one of claims 1 to 3, wherein the presentation means presents the user with a point where a security function of the security unit is set in accordance with the countermeasure scenario.

5. The controller system according to claim 4, wherein the presentation means presents the user with a point where a countermeasure that is based on an operation not using the security function of the security unit needs to be taken in accordance with the countermeasure scenario.

6. The controller system according to claim 5, wherein the presentation means presents a display prompting the user to take the countermeasure that is based on the operation.

7. The controller system according to any one of claims 1 to 6, further comprising an authentication means that authenticates that a user is able to access the controller system,
wherein the presentation means presents the point requiring the security countermeasure in the controller system only to the user authenticated by the authentication means in accordance with the countermeasure scenario.

8. The controller system according to any one of claims 1 to 7, further comprising a storage means that stores a user's confirmation operation as a confirmation history.

9. The controller system according to claim 8, further comprising a notification means that notifies the user of the confirmation history stored in the storage means.

10. The controller system according to claim 7, wherein the countermeasure scenario presented by the presentation means is editable according to an authority of the user authenticated by the authentication means.

11. The controller system according to any one of claims 1 to 10, wherein the security unit performs threat analysis in a support device connected to the controller system and stores the countermeasure scenario created.
